# EUROPÄISCHE PATENTSCHRIFT

(11) **EP 1 512 260 B1**
(45) Veröffentlichungstag und Bekanntmachung des Hinweises auf die Patenterteilung: **30.11.2005**
(21) Anmeldenummer: 02740696.6
(22) Anmeldetag: 07.06.2002
(51) Int. Cl.: H04L 29/06, H04L 12/28, H04L 29/12, H04L 29/08

(54) **VERFAHREN UND VORRICHTUNG ZUR AUTHENTIFIZIERUNG EINES TEILNEHMERS FÜR DIE INANSPRUCHNAHME VON DIENSTEN IN EINEM WIRELEES LAN (WLAN)**
METHOD AND DEVICE FOR AUTHENTICATING A SUBSCRIBER FOR UTILIZING SERVICES IN A WIRELESS LAN (WLAN)
PROCEDE ET DISPOSITIF D'AUTHENTIFICATION D'UN ABONNE POUR L'UTILISATION DE SERVICES DANS UN RESEAU LOCAL SANS FIL (WLAN)

(43) Veröffentlichungstag der Anmeldung: 09.03.2005
(73) Patentinhaber: SIEMENS AKTIENGESELLSCHAFT, 80333 München (DE)
(72) Erfinder: HAHN, Wolfgang, 16562 Bergfelde (DE); REITTER, Johann, A-4880 Berg im Attergau (AT)
(86) Internationale Anmeldenummer: PCT/EP2002/006269
(87) Internationale Veröffentlichungsnummer: WO 2003/105436

(56) Entgegenhaltungen:
- EP-A- 1 191 763
- WO-A-00/76249
- WO-A-01/91389
- WO-A-01/91419
- US-A1- 2002 062 379
- "ETSI TS 123 002 V5.6.0 Universal Mobile Telecommunications System (UMTS); Network Architecture" 3GPP / ETSI, [Online] März 2002 (2002-03), Seiten 1-49, XP002228527 Gefunden im Internet: <URL:www.etsi.org> [gefunden am 2003-01-24]
- 3GPP: "3G TR 23.821 V1.0.1 (Architecture Principles for Release 2000)" , 3G TR 23.821 V1.0.1, XX, XX, PAGE(S) 1-62 XP002175634 Abschnitt 5.3.2 auf Seite 14 -Seite 16 Abschnitt 5.4.9 auf Seite 21

## Beschreibung

Die Erfindung betrifft ein Verfahren und eine Vorrichtung zur Authentifizierung eines Teilnehmers für die Inanspruchnahme von Diensten in einem Wireless LAN (WLAN) unter Verwendung eines IP Multimedia Subsystems (IMS) eines Mobilfunknetzes.

Aus der Zeitschrift Funkschau 09/2002. Seite 14-15 sind Verfahren zur Authentifizierung von WLAN Teilnehmern in einem Mobilfunknetz bekannt, nämlich die Authentifizierung über einen NAI (Network Access Identifier) und wahlweise über eine SIM-Karte, sowie die Authentifizierung mit dem IPv6 (Internet Protocol Version 6) und einem sogenannten SIM-6 Mechanismus. Im allgemeinen wird eine Authentifikation eines Wireless LAN Teilnehmers über ein HTTP Protokoll realisiert.

WO 00/76249 A1 beschreibt eine Methode zum Autorisieren eines Internet Protokoll fähigen mobilen Gerätes für den Zugang ins Internet über ein kabelloses LAN (WLAN), GSM oder UMTS Netz. Dabei wird das Senden einer IP-Zugangsanfrage vom mobilen Gerät zu einem IP-Router über das Zugangsnetz initialisiert. Als Antwort für den Erhalt dieser Zugangsanfrage beim IP-Router wird ein IP-Adressen-routing-prefix vom IP-Router an das mobile Gerät gesandt. Der IP-Router leitet IP-Pakete nur dann an das mobile Gerät weiter, wenn er zuvor eine Autorisationsnachricht von einem Kontrollpunkt erhalten hat. Der Kontrollpunkt überwacht die Zahlung (Electronic cash) vom mobilen Gerät für die Nutzung des Internets.

US 2002/0062379 A1 beschreibt den Aufbau einer Multimedia-Sitzung bei einem mobilen Gerät mit einem Sitzungs-Päket-Zugangsträger (session packet access bearer), der zwischen dem mobilen Gerät und einem Zugangspunkt zu einem Paket-Daten-Netz über ein Funk-Zugangsnetz eingeführt ist. Der Zugangspunkt ist verbunden mit einem Multimedia-System, das Multimedia-Sitzungsdienste unterstützt. Durch Verwendung des Sitzungs-Paket-Zugangsträger wird eine Multimedia-Sitzung, die eine Vielzahl von Medien-Daten-Ströme beinhaltet, in einem mobilen Gerät initiiert. Medien-Paket-Zugangsträger zwischen dem mobilen Gerät und dem Zugangspunkt sind eingerichtet.

Aufgabe der vorliegenden Erfindung ist es, einen Teilnehmer eines Wireless LANs, der auch Teilnehmer eines Mobilfunknetzes ist, bei der Inanspruchnahme von Diensten in einem Mobilfunknetzwerk effizient zu authentifizieren.

Die Aufgabe wird erfindungsgemäß durch die Gegenstände der unabhängigen Patentansprüche bezüglich des Verfahrens und der Vorrichtung gelöst. Weiterbildungen der Erfindung sind in den Unteransprüchen angegeben. Die erfindungsgemäße Authentifizierung unter Verwendung eines IP Multimedia Subsystems hat den Vorteil, dass die Authentifizierung eines Teilnehmers für beliebige Dienste, die über das Wireless LAN erreicht werden können ohne der Installation eines separaten Servers für die Authentifizierung im Wireless LAN und ohne separater Verbindung zu einer entsprechenden Instanz im Mobilfunknetz (z. B. HLR/HSS), die mittels einer eigens dafür vorgesehenen Verbindung (Schnittstelle) kontaktiert werden muss, durchgeführt wird.

Die Erfindung wird anhand eines in Figuren dargestellten Ausführungsbeispiels näher erläutert. Im einzelnen zeigen
- Figur 1: die Architektur mit den Schnittstellen zwischen eines Wireless LAN und einem IP Multimedia Subsystem (IMS)
- Figur 2: wie das WAGW das Authentifizierungsergebnis unter Verwendung eines eigenen P-CSCF/Policy Control Funktion am Ort mit WLAN Abdeckung erhält
- Figur 3: wie das WAGW das Authentifizierungsergebnis durch die CSCF/Policy Control Funktion des IP Multimedia Subsystem (IMS) erhält
- Figur 4: wie das WAGW durch erweiterte Funktionalitäten das Authentifizierungsergebnis in Erfahrung bringt

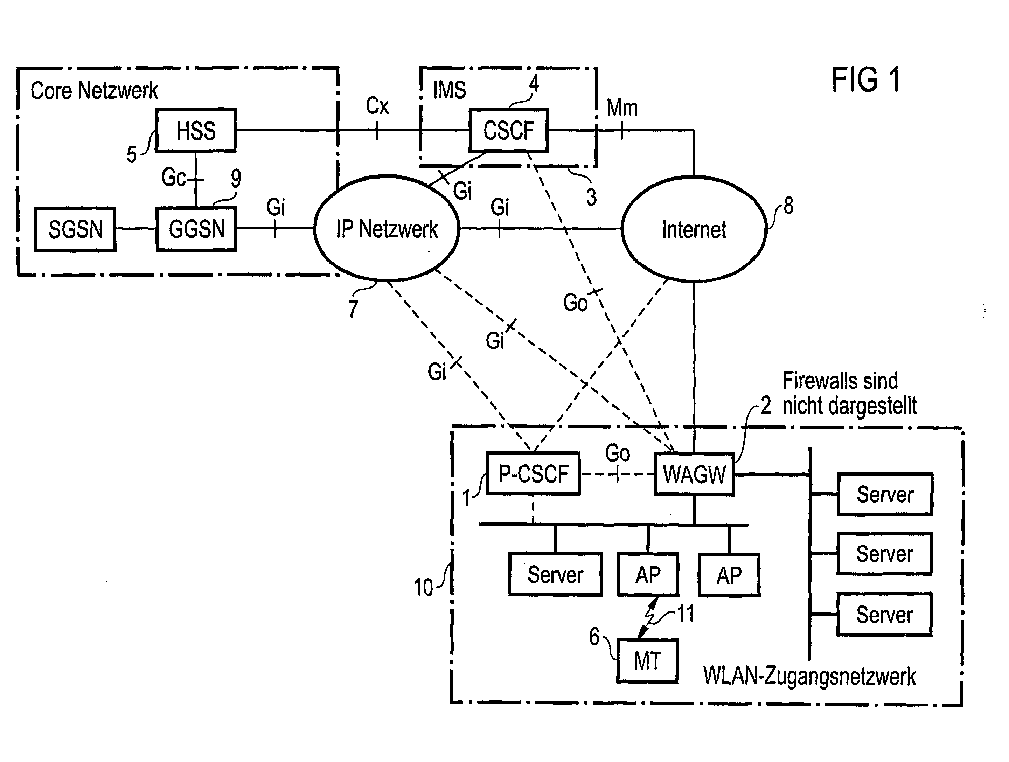

Figur 1 zeigt, wie das Wireless LAN mit einem IP Multimedia Subsystem (IMS) (3) verbunden ist. Ein Teilnehmer MT (6) eines Wireless LANs (10) ist über eine Luftschnittstelle (11) mit dem Wireless LAN an einem Ort mit Wireless LAN Abdeckung (Hotspot) verbunden. Für die Authentfizierung erhält der MT (6) vom Proxy Call State Control Funktion Knoten (P-CSCF) (1) eine IP Adresse (z. B. durch DHCP). Der Teilnehmer MT (6) kann sich damit selbst mittels SIP Registrierung im IMS (3) ohne eine prior bearer level Authentifikation (z. B. H/2, Authentifikation über die Luftschnittstelle ist optional) authentifizieren. Im IMS (3) geschieht die Authentifikation applikationsseitig im Call State Control Funktion Knoten (CSCF) (4) über eine SIP Registrierungsnachricht. Durch die Authentifikation wird dem MT (6) der Zugang zu spezifischen Profilen (z. B. WLAN - Profile) gewährt. Der CSCF (4) benutzt eine an sich für das IMS (3), aber nicht für ein WLAN (10) bekannte Authentifizierung mittels des Home Subscriber System (HSS) (5) über die Cx Schnittstelle. Der P-CSCF (1) des WLANs (10) erhält das Ergebnis der Authentifizierung über eine SIP Registrierungsanfrage (z. B. 200 OK). Dieses Ergebnis wird dem WLAN Access Gateway (WAGW) (2) übergeben. Das WAGW (2) kontrolliert den Zugang zu Diensten und überwacht die erfolgreiche Authentifizierung im IMS (3). Das Wireless LAN (10) wird mit der Gi Schnittstelle oder der Mm Schnittstelle mit dem IMS (3) verbunden. Die Gi Schnittstelle stellt eine Schnittstelle innerhalb des IP Netzwerks (7) dar und unterliegt somit besonderen Sicherheitsvorkehrungen. Berücksichtigt werden auch die geografische Entfernung zwischen dem IMS (3) und dem Ort mit der WLAN Abdeckung. Bei der Mm Schnittstelle besteht die Verbindung zwischen dem IMS (3) und dem Ort mit der WLAN Abdeckung (Hotspot) über ein IP Multimedia Netzwerk (Internet) (8).

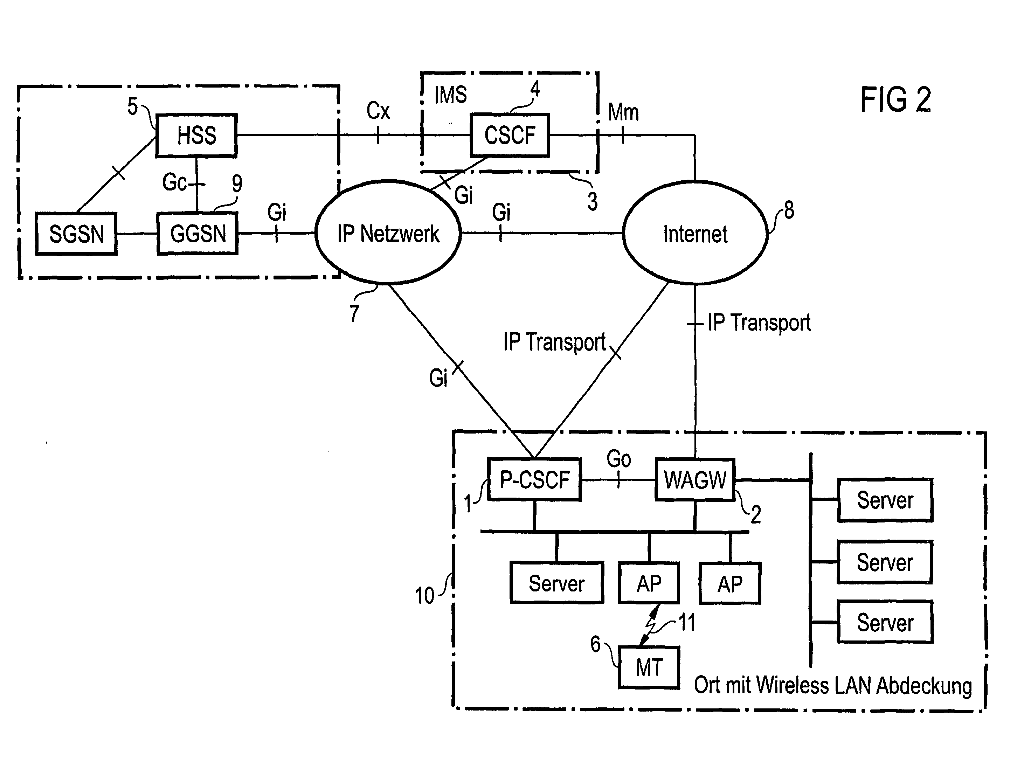

Die Authentifizierung eines MT (6) im IMS (3) erfolgt unter Verwendung des SIP Protokolls. Das Ergebnis der Authentifizierung im IMS (3) wird dem WAGW (2) zugeführt. Hierfür gibt es drei Möglichkeiten, die unter Figur 2, Figur 3 und Figur 4 beschrieben sind.

Figur 2 zeigt, wie das WAGW (2) das Authentifizierungsergebnis durch eine eigene P-CSCF (1)/Policy Kontroll Funktion an dem Ort mit WLAN Abdeckung (Hotspot) erhält. In diesem Fall ist das WLAN (10) mit einer eigenen P-CSCF (1) ausgestattet, welche dazu dient, SIP Nachrichten an die entsprechende Instanz im IMS (3) weiterzuleiten (SIP Registrierungsanfrage) und das WAGW (2) entsprechend dem Authentifizierungsergebnisses des IP Multimedia Subsystems (IMS) (SIP Antwort) zu steuern. Der P-CSCF (1) kommuniziert mit dem CSCF (4) im IP Multimedia Subsystem über eine Gi Schnittstelle oder eine Mm Schnittstelle (über Internet (8)). Die P-CSCF (1) gibt dem WAGW (2), basierend auf dem Ergebnis der Authentifizierung (SIP Registrierung) im IMS (3), Anweisungen, wie der Datenverkehr eines MT (6) durch das WAGW (2) zu behandeln ist. So kann das WAGW (2) den Datenfluss z. B. blockieren. Mittels der Policy Control Funktion kontrolliert die P-CSCF (1) den Datenverkehr durch das WAGW (2) und kann die Quantität und Qualität des Datenflusses eines MT (6) durch das WAGW (2) gewähren, beschränken, erhöhen oder ablehnen. Dieser Mechanismus ist dem der Go Schnittstelle nachgeahmt, die zwischen dem P-CSCF des IMS (3) und dem Gateway GPRS Support Knoten (GGSN) (9) installiert ist. Diese Policy Control Funktion kann Bestandteil des P-CSCF (1) sein oder aber auch eine eigene Einheit darstellen, die optional für das IP Multimedia Subsystem und die PS Domaine mitverwendet werden kann.
Ein mögliches Policy Protokoll stellt COPS (RFC 2748, angewendet für die Go Schnittstelle) dar. Die Go Schnittstelle verwendet einen IP Transport und daher wird bei der Implementierung eine gesicherte Übertragung der COPS Nachrichten innerhalb des Wireless LAN oder eine separate (abgeschottet vom Datenverkehr der Teilnehmer innerhalb des Wireless LAN) Verbindung zwischen P-CSCF (1) und WAGW (2) installiert.

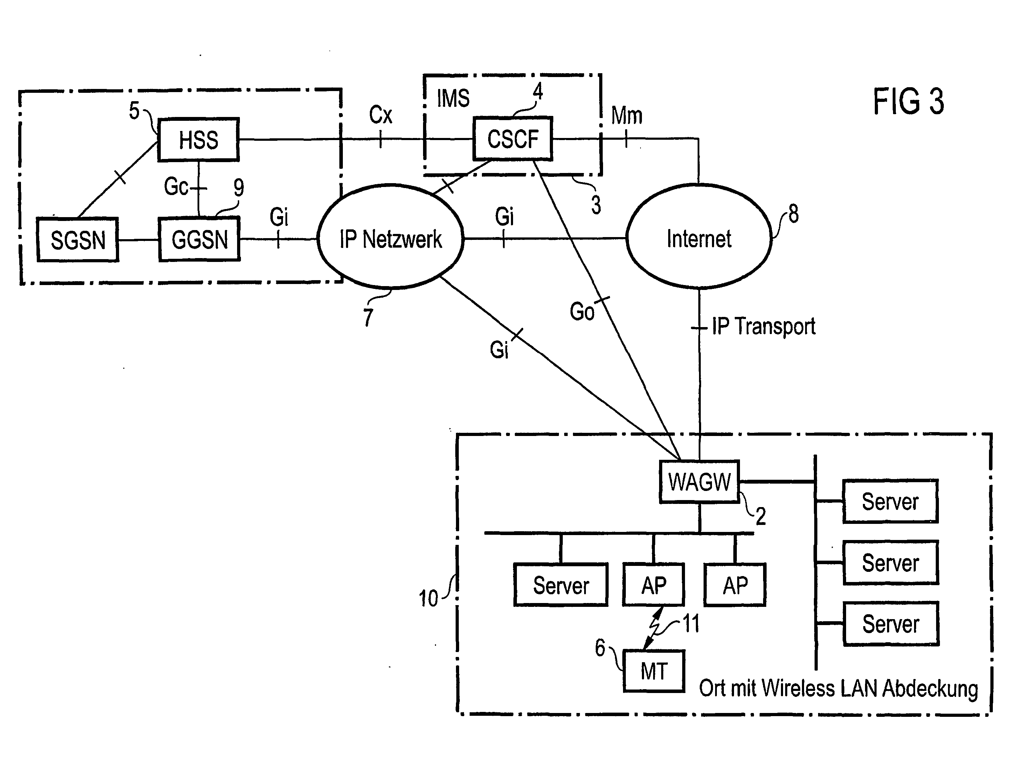

Figur 3 zeigt, wie das WAGW (2) das Ergebnis der IMS Authentifizierung von dem CSCF (4) des IMS (3) mitgeteilt bekommt. Die CSCF (4) des IMS (3) steuert das WAGW (2) dahingehend, dass es Policy Funktionalität ausübt. Hier übt jedoch die P-CSCF des IMS (3) die Steuerung des WAGW (2) aus, anstatt eine separate P-CSCF im Wireless LAN.
Mittels der Policy Funktionalität kontrolliert die P-CSCF des IMS (3) den Datenverkehr durch das WAGW (2) und kann die Quantität und Qualität des Datenflusses des MT (6) durch das WAGW (2) gewähren, beschränken, erhöhen oder ablehnen. Dieser Mechanismus ist dem der Go Schnittstelle nachgeahmt, die zwischen P-CSCF des IMS (3) und dem GGSN (9) der PS Domaine installiert ist. Zwischen dem CSCF (4) des IMS (3) und dem WAGW (2) des Wireless LANs (10) wird zur gesicherten Datenübertragung eine Go Schnittstelle installiert. Das WAGW (2) kann die SIP Nachrichten, die das Authentifizierungsergebnis enthalten über die Gi Schnittstelle oder über die Mm Schnittstelle an die CSCF (4) im IMS (3) senden.

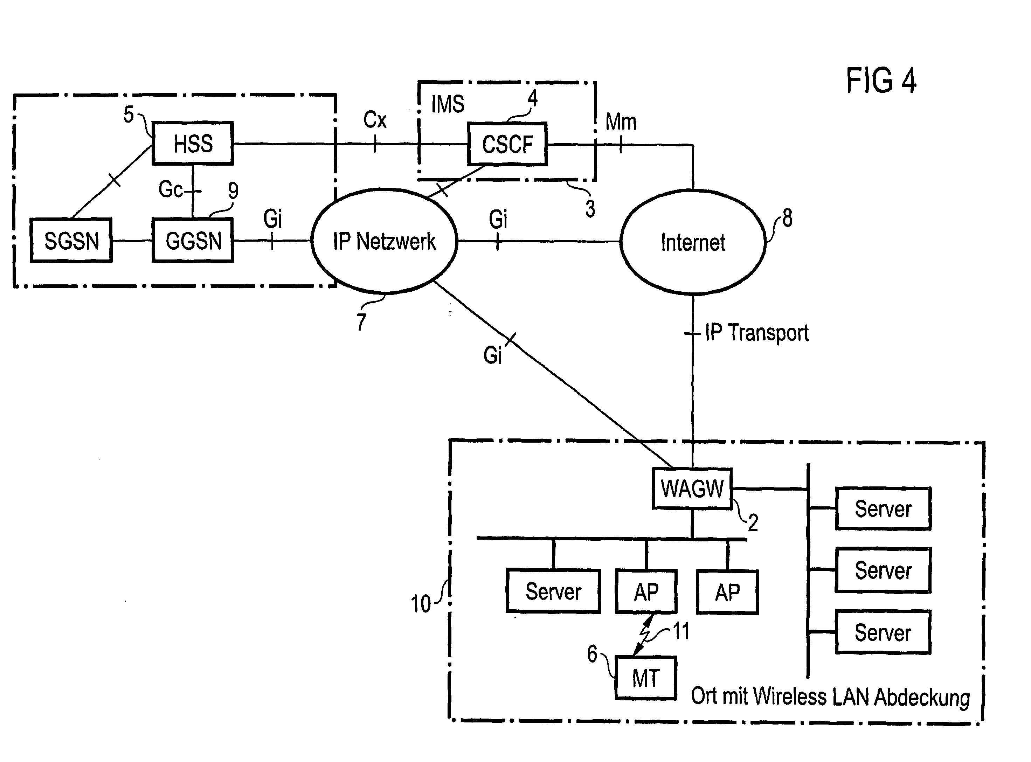

Figur 4 zeigt, wie das WAGW (2) das Authentifizierungsergebnis selbst auswertet. Das WAGW (2) erhält das Ergebnis, das angibt, ob eine Authentifizierung des MT (6) im IMS (3) stattfand und welches das Ergebnis dieser ist. Anschließend setzt das WAGW (2) das Ergebnis um, indem es Teilnehmerdaten vollständig oder eingeschränkt passieren lässt. Wird das WAGW (2) mit einer Gi Schnittstelle ausgestattet, so kann es Authentifizierungsnachrichten (SIP Registrierung) über diese an die CSCF (4) im IMS (3) senden. Ansonsten wird dafür die Mm Schnittstelle verwendet. Damit das WAGW (2) das Ergebnis der Authentifizierung (SIP Nachrichten) auswerten kann, wird es in Form eines "Application Layer Gateways" realisiert. Somit kann es das Ergebnis einer SIP Authentifizierung ohne die Zuhilfenahme einer CSCF (4) entsprechend umsetzen. Das WAGW (2) untersucht hierfür die Datenpakete auf SIP Nachrichten (Registrierungsanfragen und -antworten) und interpretiert die SIP Registrierungsantworten entsprechend für die Filterung von Teilnehmerdaten. Damit nicht jedes Datenpaket vom WAGW (2) geöffnet werden muss, kann ein Ausscheidungsprozess auf OSI Layer 3 (IP Adresse) oder OSI Layer 4 (Portnummer) durchgeführt werden. Damit ist eine IP Adresse, eine Portnummer oder sonstiges Ausscheidungskriterium ein Anlass dafür, ob ein Datenpaket oder ein Datagram an den nächst höheren OSI Layer weitergereicht wird, oder ob es das WAGW (2) passieren kann.

## Patentansprüche

1. Verfahren zur Authentifizierung eines Teilnehmers (MT,6) für die Inanspruchnahme von. Diensten in einem Wireless LAN (WLAN10) unter Verwendung eines IP Multimedia Subsystems (IMS,3) eines Mobilfunknetzes,
**dadurch gekennzeichnet,**
**dass** ein zu authentifizierender Teilnehmer (MT,6), der sich an einem Ort mit Wireless LAN-Abdeckung befindet, vom Wireless LAN (WLAN10) eine IP-Adresse zugewiesen bekommt, worauf er sich gegenüber dem IP Multimedia Subsystem (IMS,3) unter Angabe dieser IP-Adresse mittels SIP-Registrierung authentifiziert, wobei ein Element (WAGW,2) des Wireless LAN (WLAN,10) vom Ergebnis der Authentifizierung des Teilnehmers (MT, 6) gegenüber dem IP Multimedia System (IMS,3) informiert wird.

2. Verfahren nach Anspruch 1.
**dadurch gekennzeichnet,**
**dass** die Authentifizierung eines Teilnehmers (MT,6) eines Wireless LAN (WLAN,10) in einem IP Multimedia Subsystem (IMS, 3) unter Verwendung eines Home Subscriber System (HSS, 5) geschieht.

3. Verfahren nach einem der vorhergehenden Ansprüche
**dadurch gekennzeichnet,**
**dass** die Authentifizierung eines Teilnehmers (MT,6) in einem Wireless LAN (WLAN, 10) in einem IP Multimedia Subsystem (IMS,3) unter Verwendung eines Authentifizierungsservers (AAA Server) geschieht.

4. Verfahren nach einem der vorhergehenden Ansprüche,
**dadurch gekennzeichnet,**
**dass** der Teilnehmer (MT,6) über das Wireless LAN (WLAN, 10) eine SIP Register Nachricht an eine Einrichtung (CSCF, 4) des IP Multimedia Systems (IMS,3) sendet, die eine Aufforderung zur Authentifizierung dieses IP Multimedia Subsystem (IMS,3) Teilnehmers unter Verwendung der für eine IP Multimedia Subsystem-Authentifizierung vorgesehenen Mechanismen an das Home Subscriber System (HSS,5) sendet, worauf das Home Subscriber System (HSS, 5) den Teilnehmer (MT,6) unter Verwendung dieser Mechanismen authentifiziert und das Ergebnis der Authentifizierung dem Wireless LAN Access Gateway (WAGW,2) mitteilt.

5. Verfahren nach einem der vorhergehenden Ansprüche,
**dadurch gekennzeichnet,**
**dass** zum Senden und Empfangen über die Luftschnittstelle zwischen Teilnehmer (MT,6) und Wireless LAN (WLAN,10) eine Assoziation zwischen dem Teilnehmerendgerät (MT,6) und dem Wireless LAN (WLAN,10) durchgeführt wird.

6. Verfahren nach einem der vorhergehenden Ansprüche,
**dadurch gekennzeichnet,**
**dass** das Teilnehmerendgerät (MT,6) eine IP Adresse aus dem Adressraum des Wireless LAN (WLAN,10) erhält, mit der es, neben allen anderen IP-Transport basierten Daten, SIP Nachrichten senden und empfangen kann, die Authentifizierungsnachrichten von und zum IP Multimedia Subsystem (IMS,3) transportieren.

7. Verfahren nach einem der vorhergehenden Ansprüche,
**dadurch gekennzeichnet,**
**dass** der Zugang zu Diensten über ein Wireless LAN Access Gateway (WAGW, 2) kontrolliert wird, das die erfolgreiche Authentifizierung im IP Multimedia Subsystem (IMS,3) überwacht.

8. Verfahren nach einem der vorhergehenden Ansprüche,
**dadurch gekennzeichnet,**
**dass** das Wireless LAN (WLAN,10) über eine Gi Schnittstelle mit dem IP Multimedia Subsystem (IMS,3) verbunden wird.

9. Verfahren nach einem der vorhergehenden Ansprüche,
**dadurch gekennzeichnet,**
**dass** das Wireless LAN (WLAN,10) über eine Mm Schnittstelle mit dem IP Multimedia Subsystem (IMS,3) verbunden wird.

10. Verfahren nach einem der vorhergehenden Ansprüche,
**dadurch gekennzeichnet,**
**dass** das Ergebnis der Authentifizierung (P-CSCF, 1) dem Wireless LAN Access Gateway (WAGW,2) durch eine (Proxy-Call State Kontroll Funktion)/Policy Control Funktion (P-CSCF, 1) an einem Ort mit Wireless LAN-Abdeckung zugeführt wird.

11. Verfahren nach Anspruch 7,
**dadurch gekennzeichnet,**
**dass** das Wireless LAN (WLAN,10) einen Proxy-Call State Control Funktion Knoten (P-CSCF, 1) besitzt, der die SIP Nachrichten an die entsprechende Instanz im IP Multimedia Subsystem (IMS,3) weiterleitet und das WLAN Access Gateway (WAGW, 2) hinsichtlich des Authentifizierungsergebnisses des IP Multimedia Subsystem (IMS,3) steuert.

12. Verfahren nach Anspruch 7,
**dadurch gekennzeichnet,**
**dass** dem WLAN Access Gateway (WAGW,2) aufgrund des Ergebnisses der Authentifizierung im IP Multimedia Subsystems (IMS, 3) Anweisungen gegeben werden, wie der Datenverkehr eines Teilnehmers (MT,6) durch das Wireless LAN Access Gateway (WAGW,2) zu behandeln ist insbesondere Anweisungen betreffend das Blockieren des Datenverkehrs.

13. Verfahren nach einem der vorhergehenden Ansprüche,
**dadurch gekennzeichnet,**
**dass** die Proxy-Call State Control Funktion (P-CSCF, 1) mittels einer Policy Kontroll Funktion den Datenverkehr durch das Wireless LAN Access Gateway (WAGW,2) kontrolliert und die Quantität und oder die Qualität des Datenflusses eines Teilnehmers (MT,6) durch das Wireless LAN Access Gateway (WAGW,2) gewährt, beschränkt, erhöht oder ablehnt.

14. Verfahren nach einem der vorhergehenden Ansprüche,
**dadurch gekennzeichnet,**
**dass** die Policy Kontroll Funktion Bestandteil des Proxy-Call State Control Funktion Knoten (P-CSCF, 1) ist oder eine eigene Einheit darstellt.

15. Verfahren nach einem der vorhergehenden Ansprüche,
**dadurch gekennzeichnet,**
**dass** das Ergebnis der Authentifizierung dem Wireless LAN Access Gateway (WAGW,2) durch die Call State Control Function (CSCF,4)/Policy Kontroll Funktion im IP Multimedia Subsystem (IMS, 3) zugeführt wird.

16. Verfahren nach Anspruch 12,
**dadurch gekennzeichnet,**
**dass** der Call State Control Funktion Knoten (CSCF,4) des IP Multimedia Subsystem (IMS,3) das Wireless LAN Access Gateway (WAGW,2) hinsichtlich des Authentifizierungsergebnisses des IP Multimedia Subsystems (IMS, 3) steuert.

17. Verfahren nach Anspruch 13,
**dadurch gekennzeichnet,**
**dass** eine Go Schnittstelle zwischen dem Call State Control Funktion Knoten (CSCF,4) des IP Multimedia Subsystems (IMS,3) und dem Wireless LAN Access Gateway (WAGW,2) installiert wird für eine gesicherte Datenübertragung.

18. Verfahren nach einem der vorhergehenden Ansprüche,
**dadurch gekennzeichnet,**
**dass** durch erweiterte Funktionalitäten im Wireless LAN Access Gateway (WAGW,2) das Authentifizierungsergebnis ausgewertet wird.

19. Verfahren nach Anspruch 16,
**dadurch gekennzeichnet,**
**dass** das vom IP Multimedia Subsystem (IMS, 3) erhaltene Authentifizierungsergebnis vom Wireless LAN Access Gateway (WAGW, 2) umgesetzt wird, indem es (2) Teilnehmerdaten vollständig oder eingeschränkt passieren lässt.

20. Verfahren nach Anspruch 13,
**dadurch gekennzeichnet,**
**dass** die Auswertung des Authentifizierungsergebnisses mit einem "Application Layer Gateway" realisiert wird.

21. Verfahren nach einem der vorhergehenden Ansprüche,
**dadurch gekennzeichnet,**
**dass** der Teilnehmer (MT,6) des Wireless LAN (WLAN,10) auch ein Teilnehmer des mobilen Kommunikationsnetzwerks ist.

22. Verfahren nach einem der vorhergehenden Ansprüche,
**dadurch gekennzeichnet,**
**dass** das Wireless LAN (WLAN,10) in mobile Kommunikationsnetzwerke mit Hilfe von ETSI HiperLan und IEEE 802.11 integriert wird.

23. Vorrichtung zur Authentifizierung eines Teilnehmers (MT,6) für die Inanspruchnahme von Diensten in einem Wireless LAN (WLAN,10) mit Hilfe eines IP Multimedia Subsystems (IMS, 3) eines Mobilfunknetzes, **gekennzeichnet durch**
- ein IP Multimedia Subsystem (IMS, 3) zum Authentifizieren eines zu authentifizierenden Teilnehmers (MT,6) mittels SIP-Registrierung, der sich an einem Ort mit Wireless LAN-Abdeckung befindet unter Angabe einer vom Wireless LAN (WLAN,10) zugewiesenen IP-Adresse,
- ein IP Multimedia Subsystem (IMS,3) zum Informieren eines Elements (WAGW, 2) des Wireless LAN (WLAN, 10) vom Ergebnis der Authentifizierung des Teilnehmers (MT,6) gegenüber dem IP Multimedia Subsystem (IMS,3).

24. Vorrichtung nach Anspruch 23,
**dadurch gekennzeichnet,**
**dass** eine Einrichtung Proxy Call State Control Funktion Knoten (CSCF, 1) ein Knoten im Wireless LAN (WLAN10) ist.

25. Vorrichtung nach einem der Ansprüche 23 bis 24,
**dadurch gekennzeichnet,**
**dass** die Einrichtung Proxy Call Control Funktion Knoten (CSCF, 1) des IP Multimedia Subsystems (IMS,3) für die Steuerung der Authentifizierung im Wireless LAN (WLAN10) vorgesehen ist.

26. Vorrichtung nach einem der Ansprüche 23 bis 25,
**dadurch gekennzeichnet,**
**dass** das Wireless LAN Access Gateway (WAGW,2) eine Einrichtung besitzt, die so ausgebildet ist, dass sie das Authentifizierungsergebnis, welches vom IP Multimedia Subsystem (IMS,3) erhalten wird, umsetzt, indem diese Einrichtung Teilnehmerdaten vollständig oder eingeschränkt passieren lässt.

## Claims

1. Method for authenticating a subscriber (MT,6) for utilising services in a wireless LAN (WLAN,10) while using an IP multimedia subsystem (IMS,3),
**characterised in that**
a subscriber (MT,6) who is to be authenticated and who is located at a location having WLAN coverage, receives an IP address from the (WLAN,10) in an attributed manner, after which the subscriber authenticates himself to the IP multimedia subsystem (IMS,3) while giving this IP address, whereby an element (WAGW,2) of the (WLAN,10) is informed of the result of the authentication of the subscriber (MT,6) with regard to the (IMS,3).

2. Method according to claim 1,
**characterised in that**
a subscriber (MT,6) of a wireless LAN (WLAN,10) in an IP multimedia subsystem (IMS,3) is authenticated while using a home subscriber system (HSS,5).

3. Method according to one of the preceding claims,
**characterised in that**
a subscriber (MT,6) in a wireless LAN (WLAN,10) in an IP multimedia subsystem (IMS,3) is authenticated while using an authentication server (AAA server).

4. Method according to one of the preceding claims,
**characterised in that**
the subscriber (MT,6) transmits, via the wireless LAN (WLAN, 10), an SIP register message to a device (CSCF,4) of the IP multimedia system (IMS,3), which transmits a request for authentication of this IP multimedia subsystem (IMS,3) subscriber, using the mechanisms provided for an IP multimedia subsystem authentication, to the home subscriber system (HSS,5), after which the home subscriber system (HSS,5) authenticates the subscriber (MT,6) using these mechanisms and communicates the result of the authentication to the wireless LAN access gateway (WAGW,2).

5. Method according to one of the preceding claims,
**characterised in that**
an association is implemented between the subscriber terminal (MT,6) and the wireless LAN (WLAN, 10) for the purpose of transmitting and receiving via the radio interface between subscriber (MT,6) and wireless LAN (WLAN, 10).

6. Method according to one of the preceding claims,
**characterised in that**
the subscriber terminal (MT,6) receives an IP address from the address area of the wireless LAN (WLAN,10), with which - together with all other IP transport-based data - it can transmit and receive SIP messages that transport authentication messages from and to the IP multimedia subsystem (IMS,3).

7. Method according to one of the preceding claims,
**characterised in that**
the access to services is controlled via a wireless LAN access gateway (WAGW,2), which monitors successful authentication in the IP multimedia subsystem (IMS,3).

8. Method according to one of the preceding claims,
**characterised in that**
the wireless LAN (WLAN,10) is connected to the IP multimedia subsystem (IMS,3) via a Gi interface.

9. Method according to one of the preceding claims,
**characterised in that**
the wireless LAN (WLAN,10) is connected to the IP multimedia subsystem (IMS,3) via an Mm interface.

10. Method according to one of the preceding claims,
**characterised in that**
the result of the authentication (P-CSCF,1) is fed to the wireless LAN access gateway (WAGW,2) by a (proxy-call state control function)/policy control function (P-CSCF,1) at a location having wireless LAN coverage.

11. Method according to claim 7,
**characterised in that**
the wireless LAN (WLAN,10) has a proxy-call state control function node (P-CSCF, 1) which forwards the SIP messages to the corresponding entity in the IP multimedia subsystem (IMS,3) and controls the WLAN access gateway (WAGW,2) with regard to the authentication result of the IP multimedia subsystem (IMS, 3).

12. Method according to claim 7,
**characterised in that**
instructions are provided to the WLAN access gateway (WAGW,2) on the basis of the result of the authentication in the IP multimedia subsystem (IMS,3), as to how the data traffic of a subscriber (MT,6) is to be handled by the wireless LAN access gateway (WAGW,2), in particular instructions regarding the blocking of data traffic.

13. Method according to one of the preceding claims,
**characterised in that**
the proxy-call state control function (P-CSCF,1), by means of a policy control function, controls the data traffic through the wireless LAN access gateway (WAGW,2) and grants, restricts, increases or declines the quantity and/or quality of the data flow of a subscriber (MT,6) through the wireless LAN access gateway (WAGW,2).

14. Method according to one of the preceding claims,
**characterised in that**
the policy control function is part of the proxy-call state control function node (P-CSCF,1) or is a separate unit.

15. Method according to one of the preceding claims,
**characterised in that**
the result of the authentication is fed to the wireless LAN access gateway (WAGW,2) by the call state control function (CSCF,4) /policy control function in the IP multimedia subsystem (IMS,3).

16. Method according to claim 12,
**characterised in that**
the call state control function node (CSCF,4) of the IP multimedia subsystem (IMS,3) controls the wireless LAN access gateway (WAGW,2) with regard to the authentication result of the IP multimedia subsystem (IMS,3).

17. Method according to claim 13,
**characterised in that**
a Go interface is installed between the call state control function node (CSCF,4) of the IP multimedia subsystem (IMS,3) and the wireless LAN access gateway (WAGW,2), for protected data transfer.

18. Method according to one of the preceding claims,
**characterised in that**
the authentication result is evaluated by expanded functionalities in the wireless LAN access gateway (WAGW, 2).

19. Method according to claim 16,
**characterised in that**
the authentication result received from the IP multimedia subsystem (IMS,3) is converted by the wireless LAN access gateway (WAGW,2), whereby said WLAN access gateway (WAGW,2) allows subscriber data to pass through completely or with restrictions.

20. Method according to claim 13,
**characterised in that**
the evaluation of the authentication result is implemented using an "application layer gateway".

21. Method according to one of the preceding claims,
**characterised in that**
the subscriber (MT,6) of the wireless LAN (WLAN,10) is also a subscriber of the mobile communication network.

22. Method according to one of the preceding claims,
**characterised in that**
the wireless LAN network (WLAN,10) is integrated into mobile communication networks with the help of ETSI HiperLan and IEEE 802.11.

23. Device for authenticating a subscriber (MT,6) for utilising services in a wireless LAN (WLAN,10) with the help of an IP multimedia subsystem (IMS,3) of a mobile radio network, **characterised by**
- an IP multimedia system (IMS,3) for authenticating a subscriber (MT,6) who is to be authenticated by means of SIP registration, and who is located at a location having wireless LAN coverage, by giving an IP address allocated by the wireless LAN (WLAN,10), and
- an IP multimedia subsystem (IMS,3) for informing an element (WAGW,2) of the wireless LAN (WLAN,10) of the result of the authentication of the subscriber (MT,6) with regard to the IP multimedia subsystem (IMS,3).

24. Device according to claim 23,
**characterised in that**
a device constituting the proxy call state control function node (CSCF,1) is a node in the wireless LAN (WLAN,10).

25. Device according to one of claims 23 to 24,
**characterised in that**
the device constituting the proxy call state control function node (CSCF, 1) of the IP multimedia subsystem (IMS,3) is provided for controlling authentication in the wireless LAN (WLAN,10).

26. Device according to one of claims 23 to 25,
**characterised in that**
the wireless LAN access gateway (WAGW,2) has a device that is configured such that said device converts the authentication result which is received from the IP multimedia subsystem (IMS,3), by allowing subscriber data to pass through completely or with restrictions.

## Revendications

1. Procédé pour l'authentification d'un abonné (MT, 6) pour l'utilisation de services dans un Wireless LAN (WLAN 10) avec l'emploi d'un sous-système IP multimedia (IMS, 3) d'un réseau de téléphonie mobile,
**caractérisé en ce que**,
un abonné (MT, 6) à authentifier, qui se trouve dans un endroit avec couverture Wireless LAN, reçoit une adresse IP attribuée du Wireless LAN (WLAN, 10), après quoi il s'identifie par rapport au sous-système IP multimedia (IMS, 3) en indiquant cette adresse IP au moyen de l'enregistrement SIP, un élément (WAGW, 2) du Wireless LAN (WLAN, 10) étant informé du résultat de l'authentification de l'abonné (MT, 6) par rapport au système multimédia (IMS, 3).

2. Procédé selon la revendication 1,
**caractérisé en ce que**
l'authentification d'un abonné (MT, 6) d'un Wireless LAN (WLAN, 10) s'effectue dans un sous-système IP multimedia (IMS, 3) avec l'utilisation d'un Home Subscriber System (HSS, 5).

3. Procédé selon l'une quelconque des revendications précédentes,
**caractérisé en ce que**
l'authentification d'un abonné (MT, 6) dans un Wireless LAN (WLAN, 10) s'effectue dans un sous-système IP multimedia (IMS, 3) avec l'utilisation d'un server d'authentification (server AAA).

4. Procédé selon l'une quelconque des revendications précédentes,
**caractérisé en ce que**
l'abonné (MT, 6) envoie par le Wireless LAN (WLAN, 10) un message de registre SIP à un appareil (CSCF, 4) du système SIP multimedia (IMS, 3) qui envoie une demande d'authentification de cet abonné du sous-système IP multimedia (IMS, 3) avec l'utilisation des mécanismes prévus pour une authentification du sous-système IP multimedia au Home Subscriber System (HSS, 5), après quoi le Home Subscriber System (HSS, 5) authentifie l'abonné (MT, 6) avec l'utilisation de ces mécanismes et communique le résultat de l'authentification à la Wireless LAN Access Gateway (WAGW, 2).

5. Procédé selon l'une quelconque des revendications précédentes,
**caractérisé en ce que**,
pour l'émission et la réception par l'interface radio entre l'abonné (MT, 6) et le Wireless LAN (WLAN, 10), on effectue une association entre le terminal d'abonné (MT, 6) et le Wireless LAN (WLAN , 10).

6. Procédé selon l'une quelconque des revendications précédentes,
**caractérisé en ce que**
le terminal d'abonné (MT, 6) reçoit une adresse IP provenant de la zone d'adresse du Wireless LAN (WLAN, 10) avec laquelle il peut envoyer et recevoir des messages SIP en plus de toutes les autres données basées sur le transport IP, qui transportent des messages d'authentification venant du sous-système IP multimedia (IMS, 3) et allant à ce système.

7. Procédé selon l'une quelconque des revendications précédentes,
**caractérisé en ce que**
l'accès aux services est contrôlé par une Wireless LAN Access Gateway (WAGW, 2), qui contrôle l'authentification réussie dans le sous-système IP multimedia (IMS, 3).

8. Procédé selon l'une quelconque des revendications précédentes,
**caractérisé en ce que**
le Wireless LAN (WLAN, 10) est relié par une interface Gi au sous-système IP multimedia (IMS, 3).

9. Procédé selon l'une quelconque des revendications précédentes,
**caractérisé en ce que**
le Wireless LAN (WLAN, 10) est relié par une interface Mm au sous-système IP multimedia (IMS, 3).

10. Procédé selon l'une quelconque des revendications précédentes,
**caractérisé en ce que**
le résultat de l'authentification (P-CSCF, 1) est amené à la Wireless LAN Access Gateway (WAGW, 2) en un endroit avec couverture Wireless LAN par une fonction de contrôle Proxy-Call State/Fonction Policy Control (P-CSCF, 1).

11. Procédé selon la revendication 7,
**caractérisé en ce que**
le Wireless LAN (WALN, 10) présente un noeud Proxy-Call State Fonction (P-CSCF, 1), qui transmet les messages SIP à l'instance correspondante dans le sous-système IP multimedia (IMS, 3) et commande la WLAN Access Gateway (WAGW, 2) en ce qui concerne le résultat de l'authentification du sous-système IP multimédia (IMS, 3).

12. Procédé selon la revendication 7,
**caractérisé en ce que**
des instructions sont données à la WLAN Access Gateway (WAGW, 2) sur la base du résultat de l'authentification dans le sous-système IP multimedia (IMS, 3) sur la façon dont le trafic de données d'un abonné (MT, 6) doit être traité par la Wireless LAN Access Gateway (WAGW, 2), en particulier des instructions concernant le blocage du trafic de données.

13. Procédé selon l'une quelconque des revendications précédentes,
**caractérisé en ce que**
la fonction Proxy-Call State Control (P-CSCF, 1) contrôle au moyen d'une fonction Policy Control le trafic de données par la Wireless LAN Access Gateway (WAGW, 2) et garantit, diminue, augmente ou refuse la quantité et/ou la qualité du flux de données d'un abonné (MT, 6) par la Wireless LAN Access Gateway (WAGW, 2).

14. Procédé selon l'une quelconque des revendications précédentes,
**caractérisé en ce que**
la fonction Policy Control est un élément constituant du noeud Proxy-Call State Control Fonction (P-CSCF, 1) ou représente une unité propre.

15. Procédé selon l'une quelconque des revendications précédentes,
**caractérisé en ce que**
le résultat de l'authentification est amené à la Wireless LAN Access Gateway (WAGW, 2) par la Call State Control Fonction (CSCF, 4)/Policy Control Fonction) dans le sous-système IP multimedia (IMS, 3).

16. Procédé selon la revendication 12,
**caractérisé en ce que**
le noeud Call State Control Fonction (CSCF, 4) du sous-système IP multimedia (IMS, 3) commande la Wireless LAN Access Gateway (WAGW, 2) en ce qui concerne le résultat de l'authentification du sous-système IP multimedia (IMS, 3).

17. Procédé selon La revendication 13,
**caractérisé en ce que**
une interface Go est installée entre le noeud Call State Control Fonction (CSCF, 4) du sous-système IP multimedia (IMS, 3) et la Wireless LAN Access Gateway (WAGW, 2) pour une transmission de données sécurisée.

18. Procédé selon l'une quelconque des revendications précédentes,
**caractérisé en ce que**
le résultat de l'authentification est analysé par des fonctionnalités élargies dans la Wireless LAN Access Gateway (WAGW, 2).

19. procédé selon la revendication 16,
**caractérisé en ce que**
le résultat de l'authentification reçu du sous-système IP multimedia (IMS, 3) est converti par la Wireless LAN Access Gateway (WAGW, 2) du fait qu'il (2)fait passer complètement ou de façon limitée des données d'abonnés.

20. Procédé selon la revendication 13,
**caractérisé en ce que**
l'analyse de résultat de l'authentification est réalisée avec une "Application Layer Gateway".

21. Procédé selon l'une quelconque des revendications précédentes,
**caractérisé en ce que**
l'abonné (MT, 6) du Wireless LAN (WLAN, 10) est également un abonné du réseau de communication mobile.

22. Procédé selon l'une quelconque des revendications précédentes,
**caractérisé en ce que**
le Wireless LAN (WLAN, 10) est intégré dans des réseaux de communication mobiles à l'aide du ETSI HiperLan et IEEE 802.11.

23. Dispositif pour l'authentification d'un abonné (MT, 6) pour l'utilisation de services dans un Wireless LAN (WLAN, 10) à l'aide d'un sous-système IP multimedia (IMS, 3) d'un réseau de téléphonie mobile, **caractérisé par**
- un sous-système IP multimedia (IMS, 3) pour l'authentification d'un abonné (MT, 6) à authentifier au moyen d'un enregistrement SIP, qui se trouve en un lieu avec une couverture Wireless LAN avec l'indication d'une adresse IP attribuée par le Wireless LAN (WLAN, 10),
- un sous-système IP multimedia (IMS, 3) pour l'information d'un élément (WAGW, 2) du Wireless LAN (WLAN, 10) du résultat de l'authentification de l'abonné (MT, 6) par rapport au sous-système IP multimedia (IMS, 3).

24. Dispositif selon la revendication 23,
**caractérisé en ce que**
un appareil noeud Proxy Call State Control Fonction (CSCF, 1) est un noeud dans le Wireless LAN (WLAN, 10).

25. Dispositif selon l'une quelconque des revendications 23 à 24,
**caractérisé en ce que**
l'appareil noeud Proxy Call Control Fonction (CSCF, 1) du sous-système IP multimedia (IMS, 3) est prévu pour la commande de l'authentification dans le Wireless LAN (WLAN, 10).

26. Dispositif selon l'une quelconque des revendications 23 à 25,
**caractérisé en ce que**
le Wireless LAN Access Gateway (WAGW, 2) présente un appareil qui est conçu de telle sorte qu'il convertit le résultat d'authentification, qui est reçu du sous-système IP multimedia (IMS, 3) par le fait que cet appareil laisse passer complètement ou de façon limitée des données d'abonnés.
